# EUROPEAN PATENT APPLICATION

(11) **EP 1 676 688 A1**
(43) Date of publication of application: **05.07.2006**
(21) Application number: 04078574.3
(22) Date of filing: 30.12.2004
(51) Int. Cl.: B29C 45/14, B29C 51/14

(54) **Automotive interior component and manufacturing method thereof**

(71) Applicant: Kasai Kogyo Co., Ltd., Kanagawa 253-0106 (JP)
(72) Inventor: Ota, Tetsuyuki, c/o Kasai Kogyo Co., Ltd., Kouza-gun Kanagawa 256-0106 (JP); Hara, Masahiko, c/o Kasai Kogyo Co., Ltd., Kouza-gun Kanagawa 256-0106 (JP); Ohno, Tatsushi, c/o Kasai Kogyo Co., Ltd., Kouza-gun Kanagawa 256-0106 (JP)
(74) Representative: Gulde, Klaus W.

(57) **Abstract**

To provide an interior component that partly includes a laminated assembly and a manufacturing method thereof that prevent flattening of pile of a decorative member in press molding to improve appearance. A door trim 10 includes a laminated assembly (door trim upper portion) 20 including a resin foam substrate 21 that is light in weight and has a shape-holding property, a resin rib 22 integrally laminated on a rear surface of the resin foam substrate 21, and a decorative member 23 attached to a front surface of the resin foam substrate, and a resin molding (door trim lower portion) 30. For the laminated assembly 20, a resin form sheet S heated and softened and the decorative member 23 that is not heated or is heated at a low temperature are placed into a forming die assembly 40 in an laminated manner and integrated by a low pressing pressure, thereby preventing flattening of pile or thermal deformation of the decorative member 23, ensuring satisfactory moldability, and reducing a molding load in molding.

## Description

### BACKGROUND OF THE INVENTION

### Field of the Invention

The present invention relates to an automotive interior component such as a door trim, a rear parcel shelf, a floor trim, a trunk trim, a rear side trim, a pillar garnish, a roof trim, or the like, and a manufacturing method thereof. More particularly, the present invention relates to an automotive interior component that is light in weight and has an excellent appearance design and moldability, and a manufacturing method thereof.

### Description of the Related Art

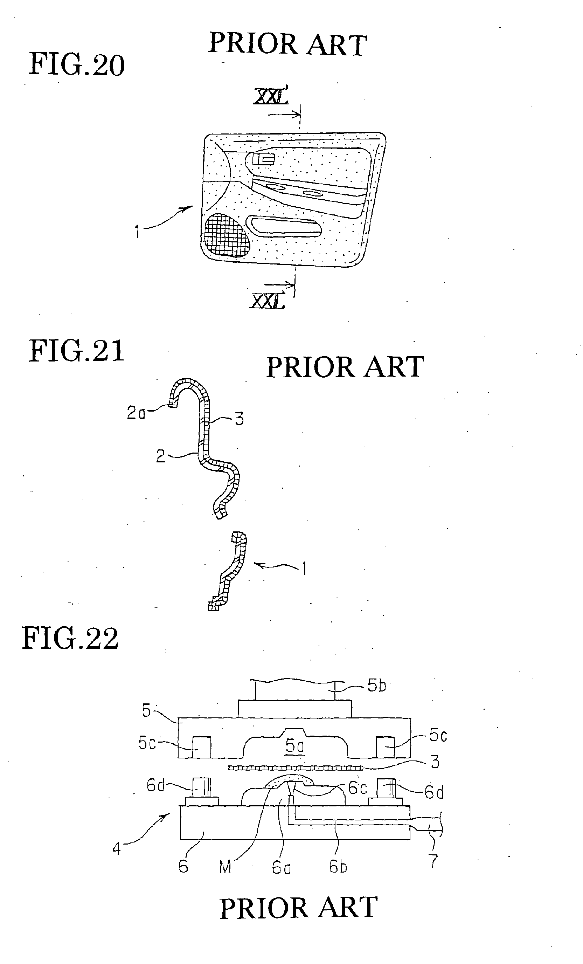

A configuration of an automotive interior component will be described with reference to FIGS. 20 and 21, taking a door trim as an example. In a door trim 1, a surface skin member 3 having an excellent appearance is integrally laminated on a surface of a resin core member 2 having a shape-holding property and rigidity required for mounting the core member on an automotive body panel, and extending substantially across the entire surface of the door trim. Reference numeral 2a denotes an inner seal mounting flange for mounting an inner seal. The resin core member 2 is made of polypropylene-based resin into which talc is mixed, and the surface skin member 3 itself has no shape-holding property and is generally made of a synthetic resin sheet such as a PVC sheet or a thermoplastic olefin (hereinafter referred to as TPO) sheet.

Next, a conventional molding method of the door trim 1 will be described with reference to FIG. 22. A forming die assembly 4 for molding the door trim 1 mainly includes an upper die 5 vertically movable in a predetermined stroke, a lower die 6 paired with the upper die 5 and secured, and an injection device 7 connected to the lower die 6. In order to shape the door trim 1 when the upper die 5 and the lower die 6 are clamped, the upper die 5 has a cavity 5a formed therein, and the lower die 6 has a core 6a. Further, in order to vertically move the upper die 5 in a predetermined stroke, an elevating cylinder 5b is connected to the upper die 5, and the lower die 6 has a manifold 6b and a gate 6c that are passages for a molten resin supplied from the injection device 7. In order to maintain a proper position of the upper die 5 that vertically moves, the upper die 5 has guide bushes 5c corresponding to guide posts 6d provided at four corners of the lower die 6.

Thus, when the upper die 5 and the lower die 6 are in the open state, the surface skin member 3 is set into the upper and lower dies. After the upper die 5 and the lower die 6 are clamped, a molten resin M is injected and filled into a cavity between the dies from the injection device 7 through the manifold 6b and the gate 6c to mold the resin core member 2 into a desired curved shape and integrally form the surface skin member 3 on a surface of the resin core member 2 (for example, see Japanese Patent Laid-Open No. 10-138268 (page 2, and FIGS. 3 and 4)). In FIG. 22, for convenience in description, the molten resin M is supplied onto a die surface of the core 6a in an open state, but the molten resin may be injected and filled into the cavity after the upper die 5 and the lower die 6 are clamped.

In the conventional door trim 1, however, the resin core member 2 has a large projection area, which increases material costs and a weight of the product. The large projection area of the resin core member 2 requires a high injection pressure during molding, which requires a mold structure resistant to the high injection pressure, thereby increasing costs for manufacturing the forming die assembly. In addition, a large amount of molten resin is cooled and solidified, which prolongs a molding cycle, thereby significantly reducing productivity.

### SUMMARY OF THE INVENTION

The invention is achieved in view of the above described circumstances, and has an object to provide an automotive interior component that facilitates a reduction in weight and leads to a reduction in costs. More particularly, the invention has an object to provide an automotive interior component having a surface with an improved appearance and smoothness to the touch, and a manufacturing method thereof.

In order to achieve the above described problems, the inventors have studied diligently and completed the invention finding that a shape-holding property is imparted to a resin foam sheet conventionally used as a surface skin member to provide a function as a coremember, a resin rib having excellent rigidity is placed on spots that require greater rigidity, that is, a peripheral edge or a panel of a product, or a spot on which a component is mounted and a spot to which a load is applied, and other portions are recessed, thereby providing an interior trim component that is light in weight and low in cost as compared with a conventional resin core member having a large projection area, and that in view of properties of the resin foam sheet and a decorative sheet attached to a surface thereof, a difference in molding temperature is made between these sheets to maintain a favorable appearance and quality of a product surface.

Specifically, there is provided an automotive interior component according to the invention that entirely or partly includes a laminated assembly including: a resin foam substrate that is formed into a desired shape, light in weight, and has a shape-holding property; a resin rib in a predetermined pattern shape integrally laminated on a rear surface of the resin foam substrate; and a decorative member attached to a front surface of the resin foam substrate, wherein in the laminated assembly, a resin form sheet heated and softened is set into forming die assembly, and the decorative member being integrally overlaid on an upper surface of the resin foam sheet, are integrally formed by remaining heat from the resin foam sheet and a low pressing pressure resulting from clamping of the forming dies.

The automotive interior component may include a door trim, a rear parcel shelf, a floor trim, a luggage trim, a trunk trim, a rear side trim, a pillar garnish, a roof trim, or the like, as long as the component at least partly includes a laminated assembly regardless of its use.

Further, the laminated assembly includes the resin foam substrate that is formed into the desired shape, light in weight, and has the shape-holding property, and the resin rib in the predetermined pattern shape integrally laminated on the rear surface of the resin foam substrate, and the resin foam substrate holds a shape thereof by heating and softening the resin foam sheet and then molding the sheet into a desired curved shape in the forming die assembly. The wording "shape-holding property" herein refers to having at least rigidity required for holding the shape without any reinforcing member such as a rib when the resin foam substrate is removed from the forming die assembly after molding. When the product shape includes a high extension rate portion, a vacuum suction mechanism may be provided in the forming die assembly so as to apply a vacuum suction force to the resin foam sheet along an inner surface of the forming die assembly after the resin foam sheet is heated and softened.

As the resin foam sheet, a thermoplastic resin to which a foaming agent is added is used. One type of thermoplastic resin or two or more types of thermoplastic resins may be used. Preferably, the thermoplastic resin may include a polyethylene resin, apolypropyleneresin, apolystyreneresin, a polyacetal resin, a polyethylene terephthalate resin, a polyvinyl alcohol resin, a polyamide resin, a polyvinyl chloride resin, an ionomer resin, an acrylonitrile butadiene styrene (ABS) resin, a polycarbonate resin, or the like may be used. The foaming agent may include an organic foaming agent, for example, an azo compound such as azodicarbonamide, a sulfohydrazide compound, a nitroso compound, and an azide compound, or an inorganic forming agent such as sodium bicarbonate.

The resin foam substrate obtained by heating and softening the resin foam sheet and then molding the sheet into the desired shape preferably has a 2 to 10x expansion ratio in view of a balance between weight and strength of the product. A cell diameter of the resin foam substrate at that time is preferably 0.1 µm to 2.0 mm, and a thickness of the substrate is preferably 0.5 to 30 mm and more preferably 1 to 10 mm.

On the other hand, the thermoplastic resin material used as the resin rib may be selected frommany types of thermoplastic resins. The thermoplastic resin may generally include a polyethylene resin, a polypropylene resin, a polystyrene resin, a polyacetal resin, a polyethylene terephthalate resin, a polyvinyl alcohol resin, a polyamide resin, a polyvinyl chloride resin, an ionomer resin, an acrylonitrile butadiene styrene (ABS) resin, a polycarbonate resin, or the like.

Various types of f iller may be mixed into the thermoplastic resin. The filler may include inorganic fiber such as glass fiber or carbon fiber, and inorganic particles such as talc, clay, silica, or calcium carbonate. Various additives such as an antioxidant, an ultraviolet absorber, a colorant, a flame retardant, or a low profile additive may be mixed into the thermoplastic resin.

In order to improve an appearance design, the decorative member is integrally laminated on the front surface of the resin foam substrate. The decorative member may include a fabric sheet such as woven fabric, non-woven fabric, or knitted fabric, or a synthetic resin sheet such as a TPO sheet, a thermoplastic urethane (hereinafter referred to as TPU) sheet, or a PVC sheet. The fabric sheet having breathability is preferably used in terms of making use of acoustic absorption of the resin foam substrate. If an olefin resin is used as a material for the decorative member, and an olefin resin is also used as a material for the resin foam substrate and the resin rib, the olefin resin may be used as all the materials, thereby providing smooth recycling.

According to the automotive interior component of the invention, the laminated assembly includes the lightweight resin foam substrate, the resin rib provided on the rear surface of the substrate, and the decorative member attached to the front surface of the substrate, thereby achieving a reduction in weight by eliminating a conventional heavy resin core member.

Further, the difference in molding temperature is made between the resin foam sheet and the decorative member, and the res in foam sheet is heated and softened at a high temperature, thereby improving moldability. On the other hand, the decorative member is not heated or is heated at a low temperature. Thus, when a fabric sheet is used as the decorative member, pile is not flattened, and when a synthetic resin sheet having a texture pattern formed in a surface thereof is used as the decorative member, the pattern is not deformed, thereby providing an favorable appearance and smoothness to the touch.

Next, in a preferable embodiment of the automotive interior component according to the invention, the decorative member includes a two layer laminated assembly constituted by a top layer and a cushioning layer, and heat transfer to the top layer is prevented by a heat insulating effect of the cushioning layer.

Further, in another embodiment of the automotive interior component according to the invention, the decorative member includes a three layer laminated assembly constituted by at least a top layer, a cushioning layer, and a rear surface non-woven layer, heat transfer to the top layer is prevented by a heat insulating effect of the cushioning layer, and joining strength between the decorative member and the resin foam substrate is increased by an anchoring effect of the rear surface non-woven layer into the resin foam sheet.

Thus, the two layer laminated assembly constituted by the top layer and the cushioning layer or the three layer laminated assembly constituted by the top layer, the cushioning layer, and the rear surface non-woven layer is used as the decorative member. The top layer of the two layer decorative member may include a thermoplastic resin sheet such as TPO or TPU, or a fabric sheet such as woven fabric, non-woven fabric, or knitted fabric. On the other hand, the cushioning layer may include polyurethane foam, polyethylene foam, polypropylene foam, or the like.

The three layer decorative member constituted by the top layer, the cushioning layer, and the rear surface non-woven layer is such that the rear surface non-woven layer is integrated with the rear surface of the two layer decorative member. The rear surface non-woven layer may include polyethylene fiber non-woven fabric, polypropylene fiber non-woven fabric, or blended fiber non-woven fabric of polyester fiber and polypropylene fiber. A surface density of the rear surface non-woven layer is preferably 10 to 200 g/m². For the materials of the decorative member, if a TPO sheet is used as the top layer, polyethylene foam or polypropylene foam is used as the cushioning layer, and polypropylene fiber non-woven fabric is used as the rear surface non-woven layer, as well as a olefin resin is used as a material for the resin foam substrate and the resin rib, the olefin resin may be used as all the materials, thereby simplifying recycling.

According to the embodiment, when the two layer laminated assembly constituted by the top layer and the cushioning layer is used as the decorative member, the heat insulating effect of the cushioning layer minimizes transfer of the remaining heat from the resin foam sheet to the top layer, thereby effectively preventing damage such as thermal deformation or flattening of pile in the top layer and ensuring a favorable appearance and quality.

When the three layer laminated assembly constituted by the top layer, the cushioning layer, and the rear surface non-woven layer provided on the rear surface of the cushioning layer is used as the decorative member, the joining strength between the decorative member and the resin foam substrate is further increased by the anchoring effect of the rear surface non-woven layer in addition to the heat insulating effect of the cushioning layer.

Next, in a further embodiment of the automotive interior component according to the invention, a hot melt film is laminated on a rear surface of the decorative member, and the hot melt film is molten by the remaining heat from the resin foam sheet heated and softened to function as a bonding medium between the resin foam substrate and the decorative member.

The hot melt film laminated on the rear surface of the decorative member preferably has a melting point of 100°C to 160°C and bonding strength of 2 to 20 N/25 mm. The remaining heat from the resin foam sheet heated at the high temperature melts the hot melt film laminated on the rear surface of the decorative member, and the molten hot melt film functions as the bonding medium to firmly integrate the decorative member with the front surface of the resin foam substrate. Also, the hotmelt film laminated on the rear surface of the decorative member minimizes film loss during lamination.

Next, in a further preferable embodiment of the automotive interior component according to the invention, a breathable material or a breathable structure having a non-breathable material with pinholes is used as the decorative member, and the hot melt film laminated on the rear surface of the decorative member is a breathable hot melt web such as a webbed hot melt web.

The breathable material includes a fabric sheet such as woven fabric, non-woven fabric, or knitted fabric used as the top layer, and the non-breathable material includes a thermoplastic resin sheet such as TPO or TPU. When the thermoplastic resin sheet that is the non-breathable material is used as the top layer, pinholes may be provided to impart breathability to the decorative member.

According to the embodiment, the resin foam sheet heated at a high temperature and the decorative member that is not heated or is heated at a low temperature are separately placed into the forming dies, and when both are laminated, the remaining heat from the resin foam sheet melts the hot melt web on the rear surface of the decorative member, and clamping of the forming dies allows the resin foam substrate and the decorative member to be integrally pressed at a low pressure. At this time, the decorative member and the hot melt web both have breathability to prevent air from accumulating between the decorative member and the resin foam substrate, thereby obtaining a laminated assembly that has a favorable appearance and smoothness to the touch.

Further, in a further embodiment of the automotive interior component according to the invention, a drawdown restraining layer is laminated on at least one surface of the resin foam sheet, the resin foam sheet heated and softened at a high temperature is placed into the forming dies with a substantially uniform thickness of the resin foam sheet being maintained by the drawdown restraining layer, and the forming dies are clamped to mold the resin foam substrate into a desired curved shape.

The resin foam sheet requires heating at a high temperature in view of moldability, and in order to prevent a drawdown during heating at the high temperature, the drawdown restraining layer is laminated on at least one surface of the resin foam sheet. Non-woven fabric (non-woven fabric containing high melting point fiber as a base material) is preferably used as the drawdown restraining layer. Also, a hot melt film is generally used as bonding means for bonding the resin foam substrate and the decorative member.

Further, the difference in molding temperature is made between the resin foam sheet and the decorative member to prevent damage by heat to the surface of the decorative member, thereby providing a favorable appearance and smoothness to the touch. In addition, the drawdown restraining layer provided on the resin foam sheet allows the resin foam sheet to be heated to a high temperature to prevent shrinkage deformation after molding, and also maintains the substantially uniform thickness of the product, thereby increasing molding accuracy of the resin foam substrate.

Next, there is provided a manufacturing method of an automotive interior component according to the invention that entirely or partly includes a laminated assembly including: a resin foam substrate that is formed into a desired shape, light in weight, and has a shape-holding property; a resin rib in a predetermined pattern shape integrally laminated on a rear surface of the resin foam substrate; and a decorative member attached to a front surface of the resin foam substrate, wherein the method includes the steps of: heating and softening the resin form sheet; placing the resin foam sheet heated and softened into forming dies and then placing the decorative member that is not heated or is heated at a low temperature on an upper surface of the resin foam sheet; clamping the forming dies; molding the resin foam substrate into a desired shape at a low pressing pressure; and integrally attaching the decorative member to the front surface of the resin foam substrate by remaining heat from the resin foam sheet; and then injecting and filling a molten resin into a groove in a lower die immediately before or after clamping of the forming dies to integrally laminate the resin rib on the rear surface of the resin foam substrate and form the laminated assembly.

The forming die assembly includes a pair of separated upper and lower dies and an injection device provided on one of the dies. For example, the forming die assembly includes a vertically movable upper die, a lower die placed below the upper die and secured, and an injection device connected to the lower die. When the upper and lower dies are used, a molten resin is supplied from the injection device onto a die surface of the lower die, that is, into a groove (corresponding to the shape of the resin rib) provided in the die surface of the lower die through resin passages such as a manifold and a gate provided in the lower die.

The resin foam substrate and the decorative member are integrally press molded by the forming die assembly, and the resin foam sheet that is a material for the resin foam substrate is heated at 160°C to 220°C by a heater, and the decorative member is not heated or is heated at a low temperature of 120°C or less.

Then, when the forming dies are open, the resin foam sheet heated and softened are placed into the forming dies, and the decorative member that is not heated or is heated at a low temperature is then overlaid on the upper surface of the resin foam sheet, and integrally pressed into a product shape by clamping the forming dies. A pressing pressure of the forming dies at this time is 0 to 40 kgf/cm², and can be set lower than a pressing pressure of 80±20 kgf/cm² in conventional press molding.

Therefore, according to the method of the invention, the pressing pressure of the forming dies is a half or less of that in the conventional press molding, thereby reducing a molding load. Also, a molding temperature applied to the decorative member is low, and the remaining heat from the resin foam sheet is applied to the rear surface of the decorative member to soften the decorative member so as to be moldable. The surface of the decorative member, however, is hardly damaged by the heat, and when a fabric sheet such as woven fabric, non-woven fabric, or knitted fabric is used as the decorative member, pile is not flattened, and when a resin sheet having a texture pattern is used as the decorative member, the pattern is not deformed, thereby maintaining a favorable appearance and quality of the decorative member.

Next, the method according to another embodiment of the invention further includes the steps of: compression bonding a hot melt film on the rear surface of the decorative member by flame laminating; then placing the decorative member on the upper surface of the resin foam sheet set in the forming dies; and melting the hot melt film by the remaining heat from the resin foam sheet to integrate the resin foam substrate with the decorative member using the hot melt film as a bonding medium.

The hot melt film is integrated with the rear surface of the decorative member by flame laminating or the like. The resin foam sheet that is a material for the resin foam substrate is heated and softened at a high temperature of 160°C to 220°C by the heater, and the decorative member is not heated or is heated at a low temperature of 120°C or less. Then, when the forming dies are in the open state, the resin foam sheet is set, and then the decorative member is placed on the upper surface of the resin foam sheet so that the hot melt film faces the surface of the resin foam sheet. The remaining heat from the resin foam sheet melts the hot melt film and softens the decorative member so as to be moldable, and thus clamping of the forming dies allows the decorative member to be integrally press molded on the front surface of the resin foam substrate using the hot melt film as the bonding medium.

Next, the method according to a further embodiment of the invention further includes the steps of: forcedly blowing warm or hot air by a blowing mechanism from a recessed surface of the lower die toward the rear surface of the resin foam sheet to restrain a drawdown of the resin foam sheet when setting the resin foam sheet into the forming die assembly; and molding the resin foam sheet while maintaining a substantially uniform thickness thereof.

Therefore, according to the invention, the resin foam sheet and the decorative member are placed into the forming dies, and even if the res in foam sheet is heated to a considerably high temperature for improving moldability, the warm or hot air is brown to the resin foam sheet by the blowing mechanism provided in a spot such as a recess where a drawdown tends to occur when the resin foam sheet is placed in the forming die assembly to cause few drawdown of the resin foam sheet, thereby ensuring a substantially uniform thickness of the resin foam sheet during molding.

As described above, the automotive interior component according to the invention entirely or partly includes the laminated assembly including: the resin foam substrate that is light in weight and has the shape-holding property; the resin rib integrally laminated on the rear surface of the resin foam substrate; and the decorative member attached to the front surface of the resin foam substrate, which eliminates the conventional heavy resin core member, thereby providing an automotive interior component that is light in weight and low in cost.

Further, the automotive interior component and the manufacturing method thereof according to the invention is such that the resin foam sheet that is the material for the resin foam substrate is heated and softened at the high temperature, while the decorative member is not heated or is heated at the low temperature, and both the materials are placed into the forming dies and integrally press molded into the product shape by clamping the forming dies. This improves moldability of the resin foam substrate, prevents damage by heat to the surface of the decorative member, prevents flattening of pile or poor molding as much as possible, provides smoothness to the touch and a favorable appearance, and improves quality.

The resin foam substrate can be molded with the pressing pressure half or less of that in the conventional press molding. This also maintains the favorable quality and appearance of the decorative member, and reduces the molding load to provide labor savings.

### BRIEF DESCRIPTION OF THE DRAWINGS

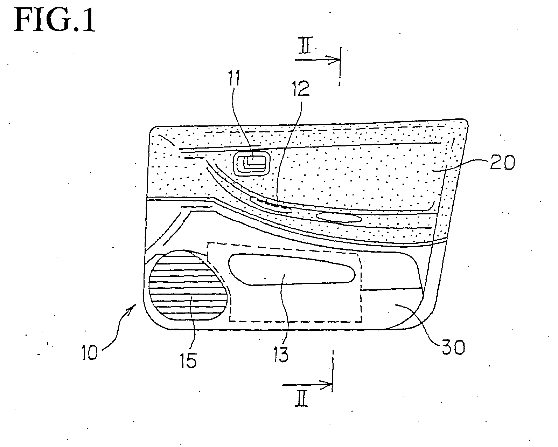

FIG. 1 is a front view of a first embodiment in which an automotive interior component according to the invention is applied to a two-tone automotive door trim, which includes two portions thus provides different and contrasting appearance for ornamental purpose;

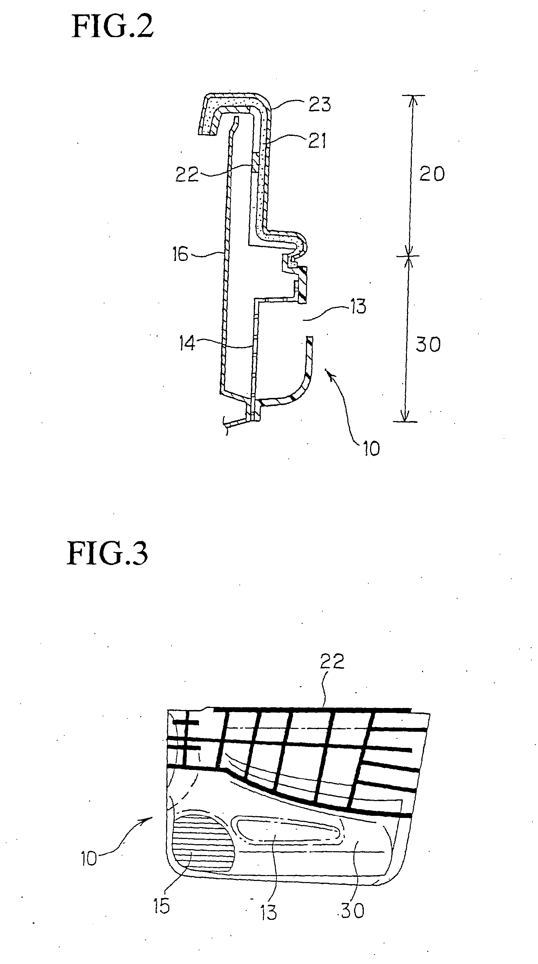

FIG. 2 is a sectional view taken along the line II-II in FIG. 1;
FIG. 3 is a front view of a resin rib in a door trim upper portion and a door trim lower portion in the automotive door trim in FIG. 1;

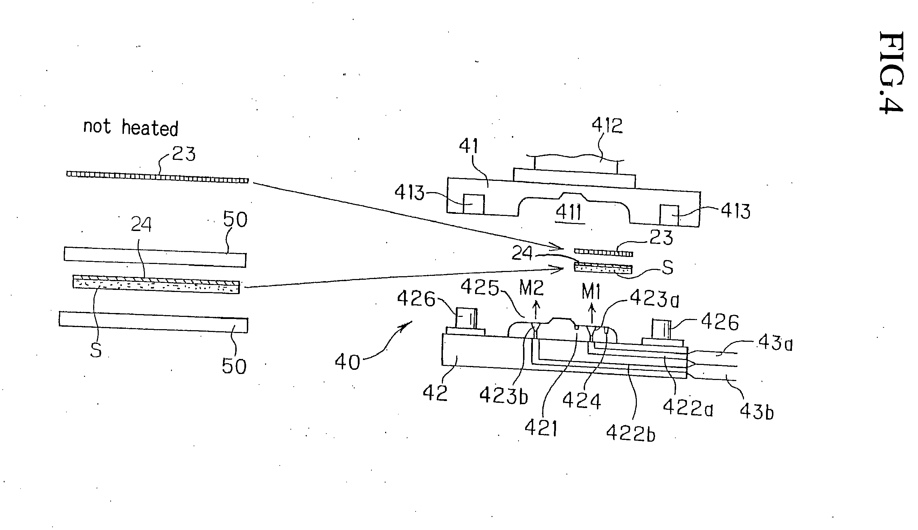

FIG. 4 illustrates an outline of the first embodiment in which the invention is applied to a manufacturing method of the door trim;

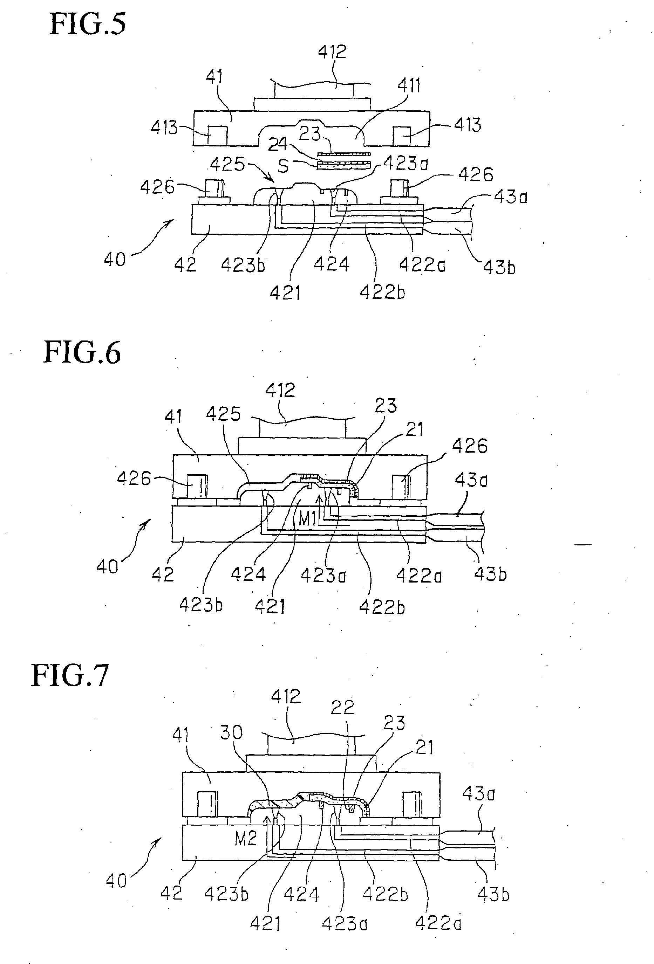

FIG. 5 illustrates a process of setting a material into a forming die assembly in the manufacturing method of the door trim in FIG. 4;
FIG. 6 illustrates a process of molding a door trim upper portion in the manufacturing method of the door trim in FIG. 4;
FIG. 7 illustrates a process of molding a door trim lower portion in the manufacturing method of the door trim in FIG. 4;

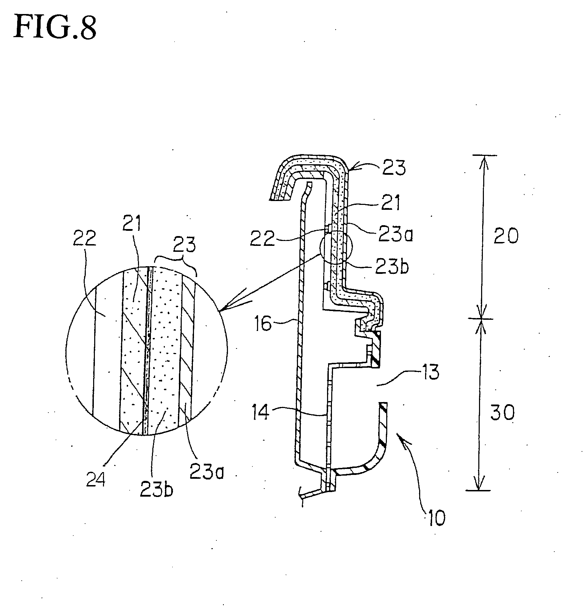

FIG. 8 is a sectional view of a configuration of a second embodiment in which the invention is applied to a two-tone automotive door trim;

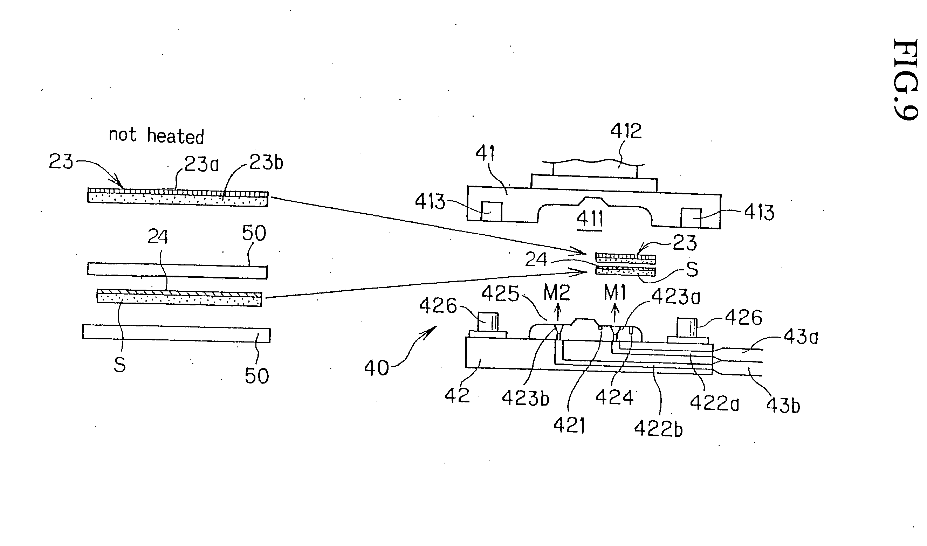

FIG. 9 illustrates an outline of a manufacturing method of the automotive door trim in FIG. 8;

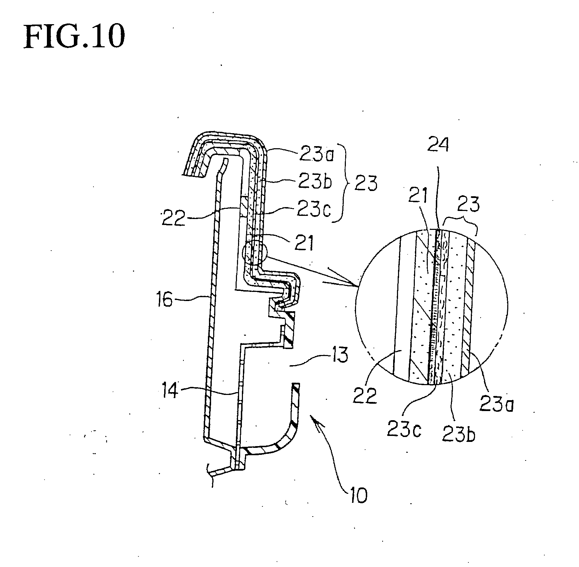

FIG. 10 is a sectional view of a configuration of a third embodiment in which the invention is applied to a two-tone automotive door trim;

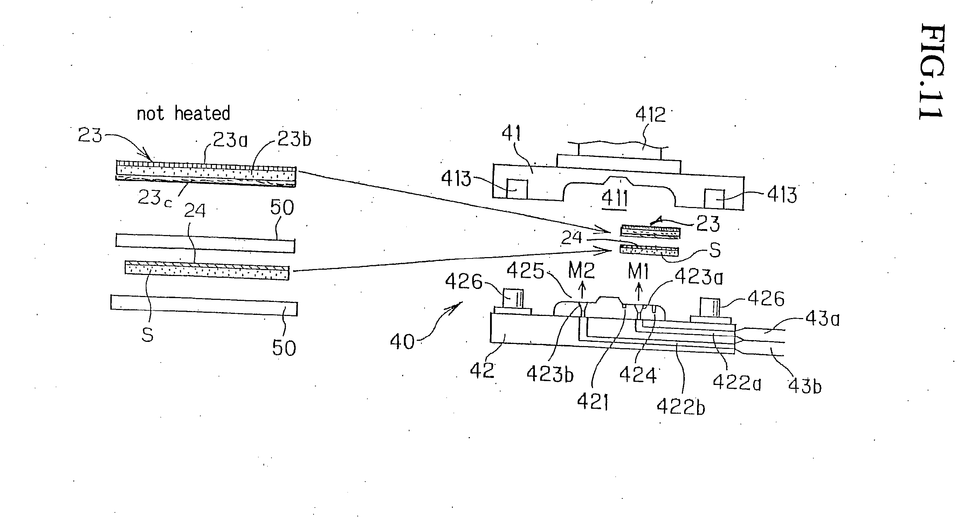

FIG. 11 illustrates an outline of a manufacturing method of the door trim in FIG. 10;

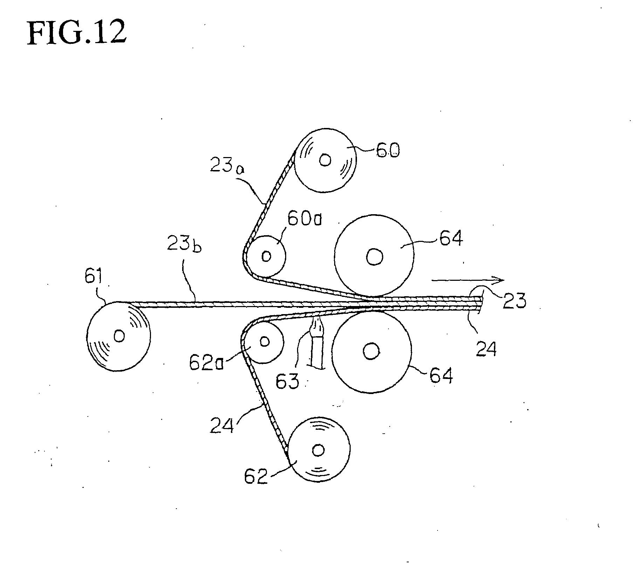

FIG. 12 shows a fourth embodiment in which the invention is applied to a two-tone automotive door trim, and illustrates a process of laminating a decorative member and a hot melt film;

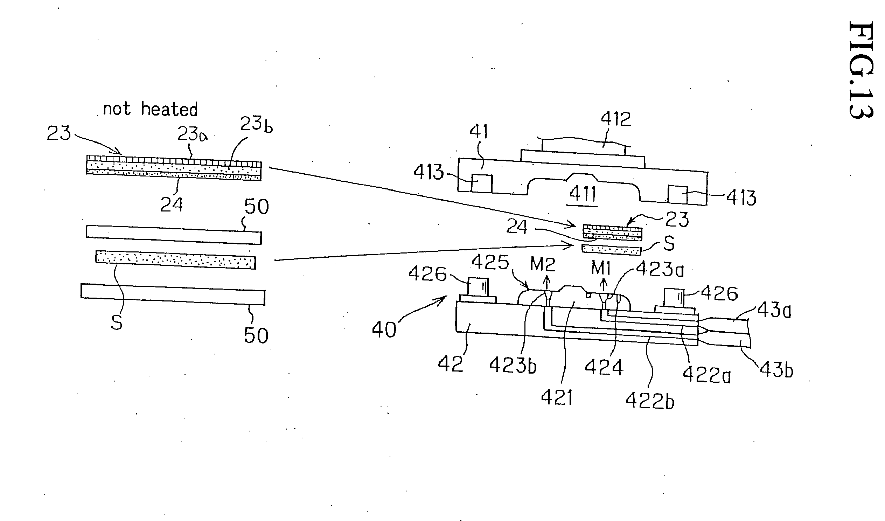

FIG. 13 illustrates an outline of a manufacturing method of the door trim in the fourth embodiment in which the invention is applied to the two-tone door trim;

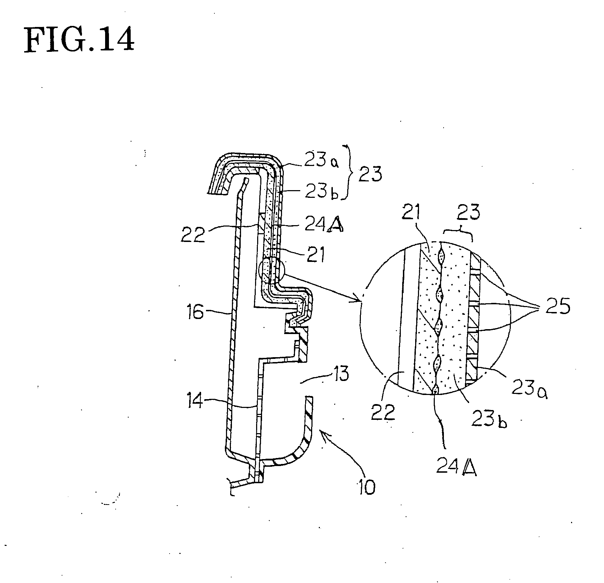

FIG. 14 is a sectional view of a configuration of a fifth embodiment in which the invention is applied to a two-tone door trim;

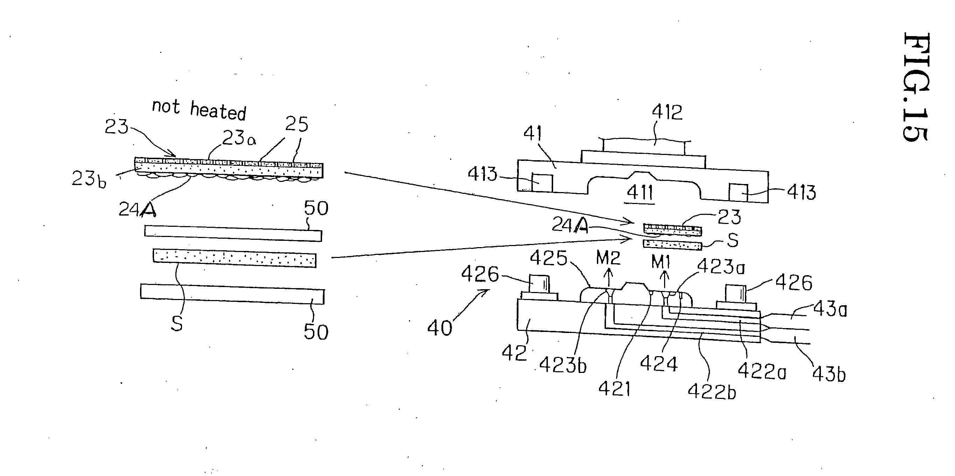

FIG. 15 illustrates an outline of a manufacturing method of the door trim in FIG. 14;

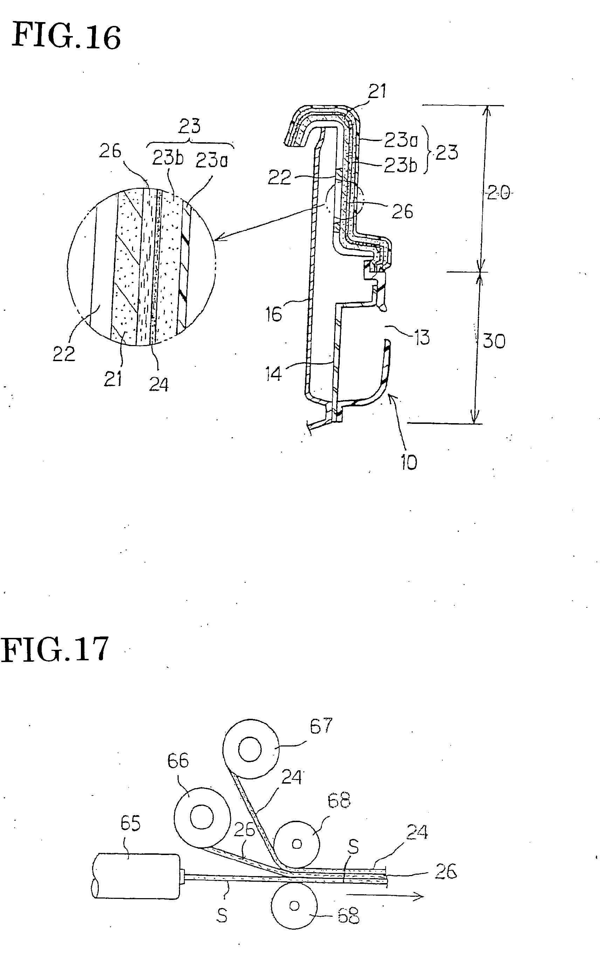

FIG. 16 is a sectional view of a configuration of a sixth embodiment in which the invention is applied to a two-tone door trim;
FIG. 17 illustrates a process of laminating a resin foam sheet and a drawdown restraining layer in the door trim in FIG. 16;

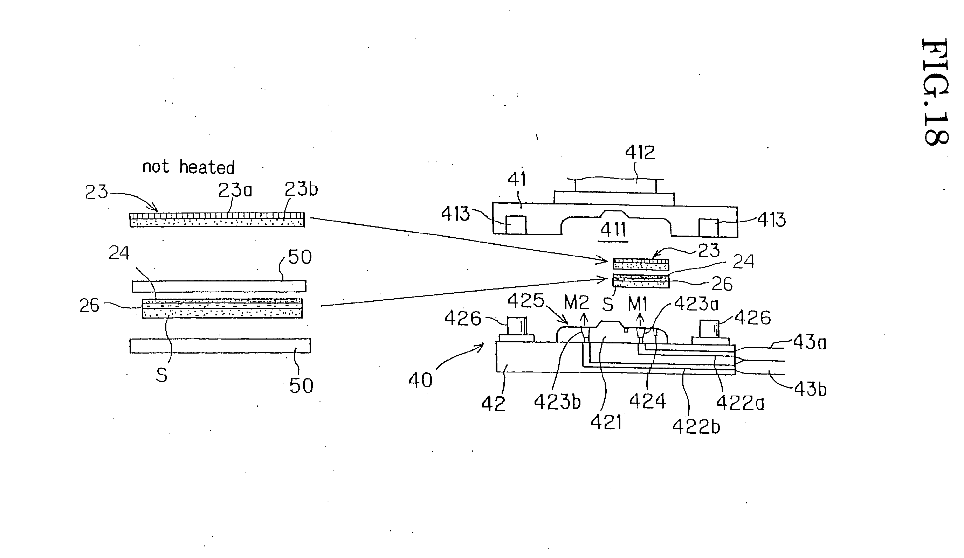

FIG. 18 illustrates an outline of a manufacturing method of the door trim in FIG. 16;

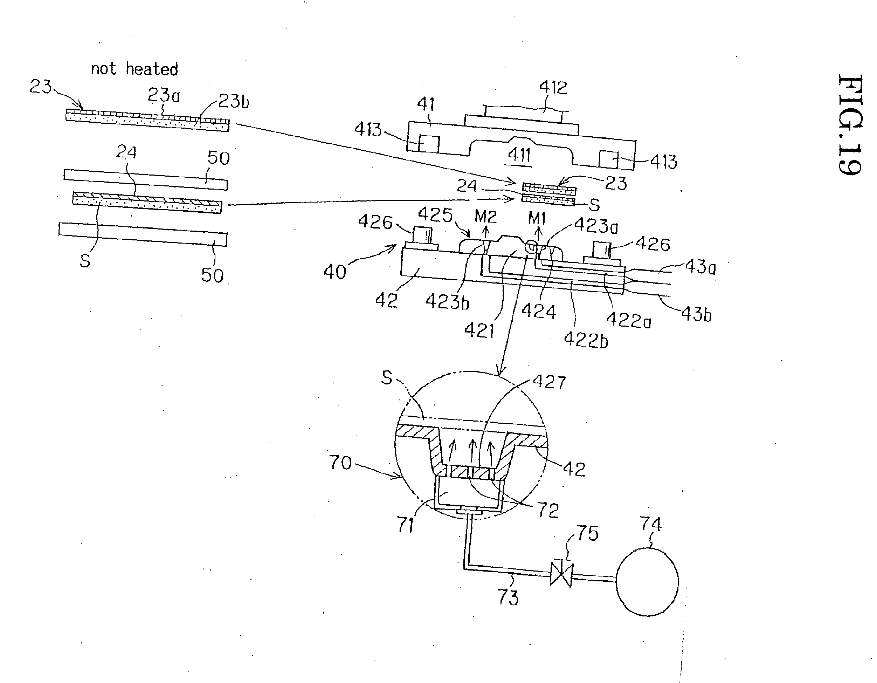

FIG. 19 illustrates an outline of a manufacturing method of a door trim in a seventh embodiment in which the invention is applied to a two-tone door trim;
FIG. 20 is a front view of a conventional door trim;
FIG. 21 is a sectional view taken along the line XXI-XXI in FIG. 20; and
FIG. 22 shows an outline of a manufacturing method of a conventional door trim.

### DETAILED DESCRIPTION OF THE PREFERRED EMBODIMENTS

Now, preferred embodiments of an automotive interior component and a manufacturing method thereof according to the invention will be described, taking an automotive door trim and a manufacturing method thereof as an example.

### [Embodiment 1]

FIGS. 1 to 7 show a first embodiment in which the invention is applied to a two-tone automotive door trim. FIG. 1 is a front view of a two-tone automotive door trim, FIG. 2 is a sectional view of a configuration of the automotive door trim, FIG. 3 is a front view of a resin rib in a door trim upper portion and a door trim lower portion in the automotive door trim, FIG. 4 illustrates an outline of a manufacturing method of an automotive interior component according to the invention, and FIGS. 5 to 7 illustrate a process of the manufacturing method of the automotive interior component according to the invention.

In FIGS. 1 and 2, a two-tone automotive door trim 10 includes vertically separated two parts, that is, a door trim upper portion 20 constituted by a laminated assembly and a door trim lower portion 30 constituted by a resin element. As functioning components mounted to the door trim 10, an inside handle escutcheon 11 and a power window switch escutcheon 12 are mounted to the door trim upper portion 20. On the other hand, a door pocket opening 13 is provided in the door trim lower portion 30, a pocket back cover (made of a resin molding) 14 is mounted to a rear side of the door pocket opening 13 as shown in FIG. 2, and a speaker grille 15 is integrally or separately formed on a front side of the door trim lower portion 30.

The automotive door trim 10 according to the invention has a feature in reducing a weight of the door trim upper portion 20 that is the laminated assembly, and improving an appearance and smoothness to the touch of the door trim upper portion 20. Specifically, as shown in FIG. 2, the door trim upper portion 20 mainly includes a resin foam substrate 21 that is molded into a desired curved shape and has a shape-holding property, a resin rib 22 having a reinforcing function and integrally laminated on a rear surface of the resin foam substrate 21, and a decorative member 23 having a decorating function and integrally laminated on a front surface of the resin foam substrate 21. In the drawings, reference numeral 16 denotes an automotive body panel.

The resin foam substrate 21 is thermoformed into a desired shape, for example, cold-press molded by a forming die assembly having a desired die surface after a resin foam sheet is heated and softened so as to have a shape-holding property, and for a high extension rate portion, the resin foam substrate 21 may be shaped by vacuum molding.

The resin foam sheet is made of a general purpose thermoplastic resin to which a foaming agent is added. The thermoplastic resin may include a polyethylene resin, a polypropylene resin, a polystyrene resin, a polyacetal resin, a polyethylene terephthalate resin, a polyvinyl alcohol resin, a polyamide resin, a polyvinyl chloride resin, an ionomer resin, an acrylonitrile butadiene styrene (ABS) resin, a polycarbonate resin, or the like. The foaming agent may include an organic foaming agent such as azodicarbonamide, and an inorganic forming agent such as sodium bicarbonate. A resin foam sheet used in this embodiment is a polypropylene resin to which sodium bicarbonate is added as a foaming agent. The resin foam substrate 21 has a 2 to 10x expansion ratio and a thickness of 0.5 to 30 mm, more particularly 1 to 10 mm.

Next, the resin rib 22 is provided on the rear surface of the resin foam substrate 21, and more particularly, as shown in FIG. 3, arranged in a predetermined crossing pattern, and is recessed at portions other than portions to which a load is applied (for example, a clip seat, an upper surface of a waist portion, an upper surface of an armrest portion, or the like). Any crossing pattern may be selected such as a crossing pattern extending in vertical and lateral directions, a slanting direction, or a combination thereof. The resin rib 22 is made of a general purpose synthetic resin molded part, and the synthetic resin may be preferably selected from a polyethylene resin, a polypropylene resin, a polystyrene resin, a polyacetal resin, a polyethylene terephthalate resin, a polyvinyl alcohol resin, a polyamide resin, a polyvinyl chloride resin, an ionomer resin, an acrylonitrile butadiene styrene (ABS) resin, a polycarbonate resin, or the like. In this embodiment, a polypropylene resin is used in view of environment and recycling. A filler may be mixed into the thermoplastic resin of the resin rib 22, and the filler may include inorganic fiber such as glass fiber or carbon fiber, and inorganic particles such as talc, clay, silica, or calcium carbonate.

Thus, the door trim 10 shown in FIGS. 1 to 3 includes the door trim upper portion 20 constituted by the laminated assembly and the door trim lower portion 30 constituted by the resin element, thereby providing an excellent appearance design with an accent. Further, the door trim upper portion 20 includes the resin foam substrate 21 having the shape-holding property, the resin rib 22 integrally laminated on the rear surface of the resin foam substrate 21, and the decorative member 23 having a decorative property. This can eliminate a resin core member extending across a product as in a conventional example, reduce a weight of the product as compared with the conventional example because the resin foam substrate 21 light in weight is used, save a resin material, and reduce costs. Further, the resin foam substrate 21 has a porous structure, and thus the door trim upper portion 20 has excellent acoustic absorption to reduce noises in a cabin.

The decorative member 23 attached to the front surface of the resin foam substrate 21 may include a fabric sheet such as woven fabric, non-woven fabric, or knitted fabric, or a synthetic resin sheet such as a PVC sheet, a TPO (thermoplastic olefin) sheet, or a synthetic leather sheet.

In order to make use of features of the interior component and themanufacturingmethod thereof according to the invention, a fabric sheet with pile such as woven fabric, non-woven fabric, or knitted fabric is preferably used. If a polyolefin resin such as a TPO sheet or polypropylene fiber is used as the decorative member 23, and an olefin resin is used as a material for the resin foam substrate 21 and the resin rib 22, the olefin resin may be used as all the materials, thereby offering a recycling advantage.

The door trim 10 includes the vertically separated two parts, that is, the door trim upper portion 20 and the door trim lower portion 30, and particularly, a difference in molding temperature is made between the decorative member 23 and the resin foam substrate 21 to provide satisfactory moldability. More particularly, when a fabric sheet with pile such as woven fabric, non-woven fabric, or knitted fabric is used as the decorative member 23, pile is not flattened at all, and when a resin sheet having a texture pattern is used, the pattern is not deformed, thereby providing smoothness to the touch and an excellent appearance of a product surface and thus improving quality of the door trim 10.

Next, an outline of a method of the invention will be described with reference to FIG. 4. First, a configuration of a forming die assembly 40 will be described. The forming die assembly 40 used for molding the door trim 10 mainly includes an upper forming die 41 vertically movable in a predetermined stroke, a lower die 42 paired with the upper die and secured, and two injection devices 43a and 43b connected to the lower die 42. More specifically, the upper die 41 has a cavity 411 that matches a product shape, and is vertically driven in a predetermined stroke by an elevating cylinder 412 connected to an upper surface of the upper die 41. Guide bushes 413 that serve as guiding mechanisms are provided at four corners of the upper die 41.

On the other hand, the lower die 42 has a core 421 corresponding to the cavity 411 in the upper die 41. The lower die 42 also has manifolds 422a and 422b and gates 423a and 423b in order to supply a molten resin onto a die surface of the core 421, and molten resins M1 and M2 supplied from the injection devices 43a and 43b through resin passages of the manifolds 422a and 422b and the gates 423a and 423b are supplied into a groove 424 formed in an upper surface of the core 421 and into a cavity 425 form forming the door trim lower portion 30. Guide posts 426 that serve as guide mechanisms protrude from four corners of the lower die 42. The guide posts 426 are guided into the guide bushes 413 when the upper die 41 and the lower die 42 are clamped, thereby maintaining a proper pressing position of the upper die 41.

When the upper die 41 and the lower die 42 are in open state, a resin foam sheet S, which is a material for the resin foam substrate 21 and is heated and softened at 160°C to 220°C by a heater 50, is placed into the forming die assembly. Thus, heating the resin foam sheet S at the high temperature prevents distortion stress from remaining in the sheet to improve moldability of the resin foam substrate 21.

On the other hand, after the resin foam sheet S is placed into the forming die assembly 40, the decorative member 23, which is not heated and is softened by remaining heat from the resin foam sheet S to follow a surface shape of the resin foam substrate 21, is overlaid on the upper surface of the resin foam sheet S. A hot melt film 24 is previously laminated on one surface of the resin foam sheet S, and the hot melt film 24 functions as a bonding medium to integrate the resin foam substrate 21 with the decorative member 23 during press molding.

Specifically, as shown in FIG. 4, the decorative member 23, which is overlaid on the upper surface of the resin foam sheet S after the resin foam sheet S heated and softened is placed into the forming die assembly 40, is not heated, and a product surface of the decorative member 23 is not damaged by heat, thereby avoiding a poor appearance such as flattening of pile or thermal deformation. The decorative member 23 may be heated at a low temperature of 120°C or less rather than being not heated. Whether the decorative member 23 is heated at the low temperature or the decorative member 23 is not heated is determined according to the product shape or properties (tensile strength, an elongation rate or the like) of the material.

Next, the process of the manufacturing method according to the invention applied to the two-tone door trim 10 will be described with reference to FIGS. 5 to 7. First, as shown in FIG. 5, the resin foam sheet S is heated and softened by the heater 50 such as an infrared heater, and the resin foam sheet S is placed into the forming dies 40 in the open state. Next, the decorative member 23 is placed on one surface of the resin foam sheet S (a surface on which the hot melt film 24 is laminated). As the resin foam sheet S, a polypropylene foam sheet (manufactured by Sumika Plastech Co., Ltd. , trade name: Sumiceller foam PP sheet, 3x expansion ratio and 3 mm thick) is used. The resin foam sheet S and the decorative member 23 are set in a position corresponding to the door trim upper portion 20 in an upper half of a cavity defined by the cavity 411 of the upper die 41 and the core 421 of the lower die 42.

Then, after the resin foam sheet S and the decorative member 23 are set, the elevating cylinder 412 of the upper die 41 is operated to move the upper die 41 down in a predetermined stroke, and as shown in FIG. 6, the upper die 41 and the lower die 42 are clamped to shape the resin foam sheet S along a desired die surface shape to mold the resin foam substrate 21 into a desired shape, and the decorative member 23 set on the upper surface of the resin foam substrate 21 is integrated with the resin foam substrate 21. A pressing pressure of the upper die 41 and the lower die 42 at this time is low at 0 to 40 kgf/cm², and the pressing pressure can be reduced to a half of a pressing pressure of 80±20 kgf/cm² in conventional press molding to reduce a load in molding.

Therefore, during the press molding, in addition to the low pressure, the remaining heat from the resin foam sheet S only is applied to the decorative member 23, and the surface of the decorative member 23 is not damaged by heat. Thus, when a fabric sheet such as woven fabric, non-woven fabric, or knitted fabric is used as a material for the decorative member 23, a conventional problem of flattening of pile caused by heat and a pressing pressure can be solved, and when a resin sheet having a texture pattern is used, thermal deformation such as deformation of the pattern can be prevented to allow the door trim upper portion 20 having smoothness to the touch and a favorable appearance to be molded.

Further, after the resin foam substrate 21 and the decorative member 23 are integrally press molded by clamping the upper die 41 and lower die 42, the molten resin M1 is injected and filled into the groove 424 from the first injection device 43a through the manifold 422a and the gate 423a in order to form the resin rib 22 in the door trim upper portion 20.

At this time, as compared with a conventional resin core member having a large projection area, resin required for forming the recessed resin rib 22 is injected, which allows reduction in an injection pressure of the resin, eliminates the need for applying a high pressing pressure on the upper die so as to overcome the injection pressure, and simply requires a pressing pressure sufficient to mold the resin foam substrate 21 and the decorative member 23. This can also solve the conventional problem of flattening of pile of the decorative member 23. An injection timing of the molten resin M1 may be set before the upper die 41 and the lower die 42 are clamped. As the molten resin M1, Sumitomo Noblen BUE81E6 (polypropylene manufactured by Sumitomo Chemical Co., Ltd., melt index of 65 g/10 minutes) into which talc is mixed in an appropriate proportion is used. As described above, after the resin foam substrate 21 and the decorative member 23 are integrally pressed molded, the resin rib 22 is integrally formed on the rear surface of the resin foam substrate 21 to complete molding of the door trim upper portion 20.

Next, as shown in FIG. 7, in order to mold the door trim lower portion 30, a molten resin M2 is injected and filled into the cavity 425 for molding the door trim lower portion 30 from the second injection device 43b through the manifold 422b and the gate 423b, and the door trim lower portion 30 is molded into a desired shape. As the molten resin M2 as a material for the door trim lower portion 30, Sumitomo Noblen BUE81E6 (polypropylene manufactured by Sumitomo Chemical Co., Ltd., melt index of 65 g/10 minutes) is used in the embodiment, but pigments may be mixed to apply desired color or a texture pattern may be incised in the surface for an improved appearance because the door trim lower portion 30 forms the product surface as compared with the material for the resin rib 22.

The molten resins M1 and M2 separately supplied for the door trim upper portion 20 and the door trim lower portion 30 may be the same material supplied from one injection device 43. In this case, a branch manifold that is a passage of a molten resin M1 supplied from a main manifold communicating with the injection device 43 to the door trim upper portion 20 and a branch manifold of a resin passage that supplies a molten resin M2 to the door trim lower portion 30 are separately provided to supply the molten resins M1 and M2 with a time lag.

In the above described process, the molding of the resin foam substrate 21 and the integration of the resin rib 22 are performed at the same time using the same forming die assembly 40, but the resin foam substrate 21 and the resin rib 22 may be individually molded using different molds and integrated by a compression bonding mold. However, the process of molding the resin foam substrate 21 and the resin rib 22 at the same time is preferably used in view of costs and operation efficiency.

### [Embodiment 2]

FIGS. 8 and 9 show a second embodiment in which the invention is applied to a two-tone automotive door trim, and FIG. 8 is a sectional view of a configuration of the door trim, and FIG. 9 illustrates an outline of a manufacturing method of the door trim. The same components as in the first embodiment are denoted by the same reference numerals, and detailed descriptions thereof will be omitted.

In the second embodiment, an automotive door trim 10 includes vertically separated two parts, that is, a door trim upper portion 20 and a door trim lower portion 30 as in the first embodiment. Specifically, the door trim upper portion 20 mainly includes a resin foam substrate 21 that is formed into a desired curved shape and has a shape-holding property, a resin rib 22 having a reinforcing function and integrally laminated on a rear surface of the resin foam substrate 21, and a decorative member 23 having a decorating function and integrally laminated on a front surface of the resin foam substrate 21.

In the second embodiment, the decorative member 23 attached to the front surface of the resin foam substrate 21 includes a two layer laminated assembly constituted by a top layer 23a and a cushioning layer 23b integrally laminated on a rear surface of the top layer 23a. More specifically, a TPO sheet is used as the top layer 23a, and polyurethane foam is used as the cushioning layer 23b. The top layer 23a may also include a synthetic resin sheet such as TPU or PVC, or a fabric sheet such as woven fabric, non-woven fabric, or knitted fabric, and the cushioning layer 23b may include polyethylene foam, polypropylene foam, or the like.

In the second embodiment, the cushioning layer 23b is used to improve softness, and as described later, a heat insulating effect of the cushioning layer 23b minimizes transfer of remaining heat from a resin foam sheet S that is a material for the resin foam substrate 21 to the top layer 23a when the resin foam sheet S and the decorative member 23 are integrally formed. Thus, when a resin sheet having a texture pattern is used as the top layer 23a, thermal deformation such as deformation of the pattern is prevented, and when woven fabric, non-woven fabric, or knitted fabric is used as the top layer 23a, pile is not flattened. If an olefin resin is used as a material for the resin foam substrate 21 and the resin rib 22, a TPO sheet is used as the top layer 23a of the decorative member 23, and an olefin resin such as polypropylene foam is used as the cushioning layer 23b, the olefin resin may be used as all the materials, thereby offering a recycling advantage.

The door trim 10 includes vertically separated two parts, that is, the door trim upper portion 20 and the door trim lower portion 30, and particularly, a difference in molding temperature is made between the decorative member 23 in the door trim upper portion 20 and the resin foam sheet S to provide satisfactory moldability. Further, the decorative member 23 includes the two layer laminated assembly constituted by the top layer 23a and the cushioning layer 23b to provide smoothness to the touch and an excellent appearance of the product surface as described above, thereby increasing the commercial value of the product.

For a manufacturing method of the door trim 10, as shown in FIG. 9, the resin foam sheet S is heated and softened at 160°C to 200°C, but the decorative member 23 including the two layer laminated assembly constituted by the top layer 23a and the cushioning layer 23b is not heated or is heated at a low temperature of 120°C or less. Whether the decorative member 23 is heated at the low temperature or the decorative member 23 is not heated is determined according to the product shape or properties (tensile strength, an elongation rate or the like) of the material. Then, similarly to the process in FIGS. 5 to 7 in the first embodiment, the door trim upper portion 20 and the door trim lower portion 30 are continuously molded by the forming die assembly 40 to easily manufacture the two-tone door trim 10.

### [Embodiment 3]

FIGS. 10 and 11 show a third embodiment in which the invention is applied to a two-tone automotive door trim, and FIG. 10 is a sectional view of a configuration of the door trim, and FIG. 11 illustrates an outline of a manufacturing method of the door trim. Also in the third embodiment, the same components as in the first embodiment are denoted by the same reference numerals, and detailed descriptions thereof will be omitted.

In the third embodiment, a configuration of a decorative member 23 in a door trim upper portion 20 is different from the configurations in the first and the second embodiments. Specifically, as shown in FIG. 10, the decorative member 23 includes a three layer laminated assembly constituted by a top layer 23a, a cushioning layer 23b, and a rear surface non-woven layer 23c from a side of a product surface.

Also in the third embodiment, a weight of the door trim upper portion 20 can be reduced, smoothness to the touch and a favorable appearance of the product surface can be maintained when a resin foam substrate 21 and the decorative member 23 are integrally formed. Further, as compared with the first embodiment, joining strength between the resin foam substrate 21 and the decorative member 23 can be increased, thereby ensuring a more favorable cushioning property of the cushioning layer 23b. In the third embodiment, for the structure of the decorative member 23, a TPO sheet is used as the top layer 23a, polyurethane foam is used as the cushioning layer 23b, and polyester fiber non-woven fabric (a surface density of 10 to 200 g/m²) is used as the rear surface non-woven fabric layer 23c.

Next, FIG. 11 shows an outline of a manufacturing method of the door trim 10 in the third embodiment, and a forming die assembly 40 to be used and a molding method conform to those in the first embodiment. Specifically, in brief, when an upper die 41 and a lower die 42 are open, a resin foam sheet S is heated and softened at a predetermined temperature and placed into the forming die assembly, and the decorative member 23 is set without being heated so that the top layer 23a faces a die surface of the upper die 41 and the rear surface non-woven fabric layer 23c faces a hot melt film 24 laminated on the resin foam sheet S.

Then, an elevating cylinder 412 is operated to move the upper die 41 down in a predetermined stroke, and the upper die 41 and the lower die 42 are clamped to shape the resin foam sheet S along a desired die surface shape to mold the resin foam substrate 21 into a desired shape, and the decorative member 23 set on an upper surface of the resin foam substrate 21 is integrated with the resin foam substrate 21. A pressing pressure of the upper die 41 and the lower die 42 at this time is low at 0 to 40 kgf/cm² as in the first embodiment, and the pressing pressure can be reduced to a half of a pressing pressure of 80±20 kgf/cm² in conventional press molding to reduce a load in molding as in the first embodiment.

In the third embodiment, the decorative member 23 includes the three-layer laminated assembly constituted by the top layer 23a, the cushioning layer 23b, and the rear surface non-woven fabric layer 23c, and a heat insulating effect of the cushioning layer 23b minimizes transfer of remaining heat from the resin foam sheet S to a front surface of the top layer 23a in the pressing process. Thus, when a resin sheet having a texture pattern such as a TPO sheet is used as the top layer 23a, thermal deformation such as deformation of the pattern is reliably prevented, and when woven fabric, non-woven fabric, or knitted fabric is used as the top layer 23a, pile is not flattened, thereby maintaining smoothness to the touch and a favorable appearance.

Further, the rear surface non-woven fabric layer 23c is integrally laminated on a rear surface of the cushioning layer 23b, and thus when the resin foam substrate 21 and the decorative member 23 are integrated via the hot melt film 24, each fiber of the rear surface non-woven fabric layer 23c becomes embedded into a molten surface of the hot melt film 24 to provide an anchoring effect, thereby providing firm joining by the anchoring effect in addition to a bonding property.

In addition, when the forming dies are opened after molding, the cushioning layer 23b of the decorative member 23 tends to return to its original thickness to ensure softness. In the third embodiment, it can be expected that the cushioning layer 23b satisfactorily returns to its original thickness after molding because the cushioning layer 23b does not directly come into contact with the hot melt film 24 of the resin foam sheet S with the rear surface non-woven fabric layer 23c being placed between the cushioning layer 23b and the hot melt film 24. Also, softness can be obtained even when a thin material is used as the cushioning layer 23b.

### [Embodiment 4]

FIGS. 12 and 13 show a fourth embodiment in which the invention is applied to a two-tone automotive door trim. A configuration of the door trim 10 is the same as the sectional configuration in FIG. 8 in the second embodiment, and descriptions thereof will be omitted. A different feature from the second embodiment is that a hot melt film 24 is not laminated on a resin foam sheet S but on a rear surface of a decorative member 23. FIG. 12 shows a process of laminating the decorative member and the hot melt film, and FIG. 13 shows an outline of a manufacturing method of the door trim in the fourth embodiment.

FIG. 12 shows a flame laminating process for laminating the hot melt film 24 on the rear surface of the decorative member 23. As shown, a top layer 23a and a cushioning layer 23b are fed from a whole cloth roll 60 of the top layer 23a that forms the decorative member 23 and a whole cloth roll 61 of the cushioning layer 23b, respectively, the hot melt film 24 is similarly fed from a whole cloth roll 62 of the hot melt film 24, heat is applied by flame 63, and compression bonding is performed by a pair of compression bonding rolls 64, thereby allowing the hot melt film 24 to be easily laminated on the rear surface of the decorative member 23.

Film loss when the hot melt film 24 is laminated on the rear surface of the decorative member 23 by the flame laminating is not considerably great, although a thickness of the hot melt film 24 is reduced from an original thickness of 110 µm to a remaining thickness of 100 µm in the compression bonding process. This film loss of the hot melt film 24 is much less than a case, for example, where a film thickness is reduced from 130 µm to 100 µm when the hot melt film 24 is laminated in extrusion of the resin foam sheet S. The hot melt film 24 preferably has a melting point of 100°C to 160°C and bonding strength with the decorative member 23 of 2 to 20 N/25 mm. In FIG. 12, reference numerals 60a and 62a denote guide rolls.

Next, with reference to FIG. 13, the outline of the manufacturing method of the door trim 10 in the fourth embodiment will be described. When the upper die 41 and the lower die 42 are in open state, the resin foam sheet S, which is a material for a resin foam substrate 21 and is heated and softened at a high temperature of 160°C to 220°C by a heater 50, is placed into a forming die assembly 40. The decorative member 23, which is not heated, is placed on an upper surface of the resin foam sheet S. The hot melt film 24 is previously laminated on the rear surface (the surface facing the resin foam sheet S) of the decorative member 23, and the hot melt film 24 functions as a bonding medium to integrate the resin foam substrate 21 with the decorative member 23 in press molding. Specifically, the resin foam sheet S heated and softened is placed into the forming die assembly 40, and the decorative member 23, which is not heated and whose product surface is not excessively softened, is overlaid on the upper surface of the resin foam sheet S, thereby avoiding a problem of thermal deformation such as deformation of a texture pattern or flattening of pile. Further, when the decorative member 23 is overlaid on the heated resin foam sheet S, the decorative member 23 is moderately softened by remaining heat from the resin foam sheet S and thus satisfactorily follows a cavity shape to prevent defects such as wrinkles or cuts and provide excellent moldability. The decorative member 23 may be heated at a low temperature of 120°C or less rather than being not heated. Whether the decorative member 23 is heated at the low temperature or the decorative member 23 is not heated is determined according to the product shape or properties (tensile strength, an elongation rate or the like) of the material.

Then, a door trim upper portion 20 and a door trim lower portion 30 can be continuously molded by the forming die assembly 40 using the process in FIGS. 5 to 7 in the first embodiment to complete molding of the door trim 10.

### [Embodiment 5]

FIGS. 14 and 15 show a fifth embodiment in which the invention is applied to a two-tone automotive door trim. FIG. 14 is a sectional view of a configuration of the door trim, and FIG. 15 illustrates an outline of a manufacturing method of the door trim. The same components as in the first to the fourth embodiments are denoted by the same reference numerals, and detailed descriptions thereof will be omitted.

In the fifth embodiment, configurations of a decorative member 23 and a hot melt film 24 in a door trim upper portion 20 are different from those in the first embodiment.
Specifically, as shown in FIG. 14, a TPO sheet is used as a top layer 23a of the decorative member 23, and many pinholes 25 are provided in the top layer 23a for breathability. The top layer 23a having the pinholes 25 and a cushioning layer 23b made of polyurethane foam both have breathability, and thus the entire decorative member 23 has breathability. Further, a webbed hot melt web 24A is used as the hot melt film 24 laminated on a rear surface of the decorative member 23.

Next, an outline of the manufacturing method of the door trim 10 in the fifth embodiment will be described with reference to FIG. 15. The manufacturing method in the fifth embodiment is basically similar to the method in the first embodiment. A resin foam sheet S is heated at a high temperature of 160°C to 220°C by a heater 50, and the decorative member 23 is not heated or, if desired, is heated at a low temperature of 120°C or less. Then, the resin foam sheet S is placed into the forming die assembly 40 and set along a die surface of a lower die 42, then the decorative member 23 is placed on an upper surface of the resin foam sheet S so that the webbed hot melt web 24A of the decorative member 23 faces the resin foam sheet S, and the forming die assembly 40 is clamped. Thus, the resin foam sheet S follows a cavity shape of the forming die assembly 40 to mold a resin foam substrate 21 into a desired shape, and remaining heat from the resin foam sheet S provides satisfactory moldability to the decorative member 23. Further, the webbed hot melt web 24A functions as a bonding medium, and the decorative member 23 is firmly integrally joined to a front surface of the resin foam substrate 21. At this time, a front surface of the decorative member 23 is not considerably affected by heat, thereby avoiding thermal deformation such as deformation of a texture pattern.

Further, in the fifth embodiment, the pinholes 25 are provided in the top layer 23a, and the webbed hot melt web 24A is used as the hot melt film, thereby providing breathability to both the decorative member 23 and the webbed hot melt web 24A. This prevents air from accumulating between the decorative member 23 and the resin foam substrate 21 to provide an improved appearance and smoothness to the touch. After the resin foam substrate 21 and the decorative member 23 are integrally pressed by clamping the forming die assembly 40, similarly to the first embodiment, a molten resin M1 is supplied from a first injection device 43a, and injected and filled into a groove 424 in the lower die 42 to integrate a latticed resin rib 22 with a rear surface of the resin foam substrate 21 at a predetermined spot to complete molding of the door trim upper portion 20. When a cloth sheet other than a TPO sheet and a TPU sheet is used as a material for the top layer 23a of the decorative member 23, the webbed hot melt web 24A may be simply used because the cloth sheet has breathability. A hot melt web that is a hot melt film 24 having many pores may be used instead of the webbed hot melt web 24A.

### [Embodiment 6]

FIGS. 16 to 18 show a sixth embodiment in which the invention is applied to a two-tone automotive door trim 10. FIG. 16 is a sectional view of a configuration of the door trim, FIG. 17 illustrates a laminating process for integrating a drawdown restraining layer with a whole cloth sheet of a material of a resin foam substrate in the door trim, and FIG. 18 illustrates an outline of a manufacturing method of the door trim in the sixth embodiment.

Also in the sixth embodiment, the door trim 10 includes vertically separated two parts, that is, a door trim upper portion 20 and a door trim lower portion 30, and particularly, a difference in molding temperature is made between a decorative member 23 in the door trim upper portion 20 and a resin foam sheet S to improve moldability of a resin foam substrate 21 and maintain a favorable appearance and smoothness to the touch of a surface of the decorative member 23 as in the above described embodiments. Further, a drawdown restraining layer 26 is laminated on the resin foam sheet S that is a material for the resin foam substrate 21 to prevent a drawdown even if the resin foam sheet S is heated and softened at a higher temperature, thereby maintaining a uniform thickness of a product to improve moldability.

The process of laminating the drawdown restraining layer 26 on the resin foam sheet S will be described with reference to FIG. 17. In FIG. 17, the resin foam sheet S is extruded from an extruder 65 and fed in a direction of arrow, and during the feeding, the drawdown restraining layer 26 and a hot melt film 24 supplied from whole cloth rolls 66 and 67, respectively, are firmly integrally joined by remaining heat from the resin foam sheet S and a rolling pressure between a pair of compression bonding rolls 68 and 68.

Then, when an upper die 41 and a lower die 42 are in open state, the resin foam sheet S that is the material for the resin foam substrate 21 is placed into a forming die assembly as shown in FIG. 18, and the drawdown restraining layer 26 is laminated on one surface of the resin foam sheet S, and the hot melt film 24 is integrated with an outer surface of the drawdown restraining layer 26. In the embodiment, non-woven fabric (a surface density of 20 to 200 g/m²) is used as the drawdown restraining layer 26, and a polyethylene film is used as the hot melt film 24. The resin foam sheet S is heated and softened at a high temperature of 160°C to 220°C by a heater 50, while the decorative member 23, which is overlaid on one surface (a surface of the hot melt film 24) of the resin foam sheet S when the resin foam sheet S is placed into the forming die assembly 40, is not heated or is heated at a low temperature of 120°C or less.

Thus, the decorative member 23 is not heated or is heated at the low temperature, while the drawdown restraining layer 26 and the hot melt film 24 are laminated on one surface of the resin foam sheet S, and the resin foam sheet S is heated at the high temperature by the heater 50. Thus, when these materials are placed into the forming die assembly 40, the resin foam sheet S at the high temperature is softened, and a drawdown that is hanging down of a center of the sheet by gravity tends to occur, but the drawdown restraining layer 26 is integrated with one surface of the sheet to effectively prevent the drawdown and facilitate transfer of the sheet to the forming die assembly 40. Also when placed on a die surface of the lower die 42, the sheet do not hang down by an uneven shape of the lower die 42, thereby ensuring a uniform thickness of the resin foam substrate 21. Further, the decorative member 23 is not heated or is heated at the low temperature to prevent a product surface of the decorative member 23 from being excessively softened, thereby avoiding thermal deformation such as deformation of a texture pattern. Further, when the decorative member 23 is overlaid on the heated resin foam sheet S, the decorative member 23 is moderately softened by the remaining heat from the resin foam sheet S and thus satisfactorily follows a cavity shape to prevent defects such as wrinkles or cuts and provide excellent moldability.

Then, the resin foam sheet S on which the drawdown restraining layer 26 is laminated is heated and softened, and placed into the forming die assembly 40, and after the decorative member 23 is placed on an upper surface of the resin foam sheet S, the door trim upper portion 20 and the door trim lower portion 30 are continuously molded in the process in FIGS. 5 to 7 in the first embodiment to easily mold the door trim 10. The drawdown restraining layer 26 may be laminated on the side of the decorative member 23 of the resin foam sheet S, but may be laminated on the opposite side from the decorative member 23.

### [Embodiment 7]

FIG. 19 shows a seventh embodiment of the invention. The seventh embodiment is also applied to a two-tone automotive door trim 10 like the above described embodiments, but has a feature in a manufacturing method thereof. An outline of the manufacturing method of the door trim 10 in the seventh embodiment will be described with reference to FIG. 19. A hot melt film 24 is laminated on one surface of a resin foam sheet S that is a material for a resin foam substrate 21, the resin foam sheet S is heated at a high temperature of 160°C to 220°C by a heater 50, and a decorative member 23 is not heated or is heated at a low temperature of 120°C or less. When forming dies open with an upper die 41 of a forming die assembly 40 being raised, the resin foam sheet S is set in a predetermined position, and the decorative member 23 is laminated on an upper surface of the resin foam sheet S. Particularly, in the forming die assembly 40 used in the seventh embodiment, a blowing mechanism 70 is provided in a recessed surface 427 of a lower die 42. For details of the blowing mechanism 70, a blowing small chamber 71 is provided in the lower die 42, blowing holes 72 are provided so that the blowing small chamber 71 communicates with a die surface of the lower die 42, an air supply pipe 73 is provided from the blowing small chamber 71, connected to a blower 74, and has an on/off valve 75.

Thus, when the resin foam sheet S (the hot melt film 24 is laminated on one surface) heated at the high temperature is set onto the die surface of the lower die 42, the resin foam sheet S is at the high temperature and softened, and thus tends to hang down by its self weight. However, at the recessed surface 427 where the hanging down particularly tends to occur, warm or hot air is forcedly blown from the blowing holes 72 toward a rear surface of the resin foam sheet S, thereby preventing a drawdown that is hanging down of the resin foam sheet S by its self weight as much as possible.

A molding process after the resin foam sheet S and the decorative member 23 are set is similar to the first embodiment, and descriptions thereof will be omitted. In a door trim upper portion 20 in the molded door trim 10, the resin foam sheet S is heated at the high temperature to prevent shrinkage deformation from remaining in the resin foam substrate 21 to eliminate shrinkage deformation after molding, improve molding accuracy, avoid a drawdown of the resin foam sheet S by applying the blowing pressure by the blowing mechanism 70 to a predetermined spot when the resin foam sheet S is placed into the forming die assembly 40, and eliminate variations in thickness of resin foam sheet S, thereby providing a substantially uniform thickness of the molded resin foam substrate 21 and increasing molding accuracy, like the first embodiment.

In the seventh embodiment, the blowing mechanism 70 is provided in the forming die assembly 40 in order to eliminate the drawdown of the resin foam sheet S, and a member that restrains the drawdown is omitted from the resin foam sheet S, but a combination of the sixth and the seventh embodiments, specifically, a method of driving the blowing mechanism 70 in the forming die assembly 40 that avoids the drawdown when the resin foam sheet S is set, with a configuration in which the drawdown restraining layer 26 of non-woven fabric or the like is integrated with one surface of the resin foam sheet S, may be used to more effectively prevent the drawdown.

In the above described embodiments, the door trim upper portion 20 in the door trim 10 including the vertically separated two parts includes the laminated assembly according to the invention, but the entire door trim 10 may include a laminated assembly, and as long as the laminated assembly includes the resin foam substrate 21, the resin rib 22, and the decorative member 23, the structure may be applied to general interior components such as a rear parcel shelf, a floor trim, a trunk trim, a rear side trim, a pillar garnish, a roof trim, or the like.

## Claims

1. An automotive interior component (10) that entirely or partly includes a laminated assembly (20) comprising:
a resin foam substrate (21) that is formed into a desired shape, light in weight, and has a shape-holding property;
a resin rib (22) in a predetermined pattern shape integrally laminated on a rear surface of the resin foam substrate (21); and
a decorative member (23) attached to a front surface of said resin foam substrate (21),
wherein in said laminated assembly (20), a resin form sheet (S) heated and softened is set into forming dies assembly (41, 42), and the decorative member (23)being overlaid on an upper surface of the resin foam sheet (S), are integrally formed by remaining heat from said resin foam sheet (S) and a low pressing pressure by clamping of the forming dies (41, 42).

2. The automotive interior component according to claim 1,
wherein said decorative member (23) includes a two layer laminated assembly constituted by a top layer (23a) and a cushioning layer (23b), and heat transfer to the top layer (23a) is prevented by a heat insulating effect of the cushioning layer (23b).

3. The automotive interior component according to claim 1,
wherein said decorative member (23) includes a three layer laminated assembly constituted by at least a top layer (23a), a cushioning layer (23b), and a rear surface non-woven layer (23c), heat transfer to the top layer (23a) is prevented by a heat insulating effect of said cushioning layer (23b), and joining strength between the decorative member (23) and the resin foam substrate (21) is increased by an anchoring effect of the rear surface non-woven layer (23c) into the resin foam sheet (S).

4. The automotive interior component according to claim 1,
wherein a hot melt film (24) is laminated on a rear surface of said decorative member (23), and said hot melt film (24) is molten by remaining heat from the resin foam sheet (S) heated and softened to function as a bonding medium between the resin foam substrate (21) and the decorative member (23).

5. The automotive interior component according to claim 1,
wherein a breathable material or a breathable structure having a non-breathable material with pinholes is used as said decorative member (23), a breathable hot melt web (24A) is laminated on the rear surface of the decorative member (23), and said hot melt web (24A) is molten by remaining heat from the resin foam sheet (S) heated and softened to function as a bonding medium between the resin foam substrate (21) and the decorative member (23).

6. The automotive interior component according to claim 1,
wherein a drawdown restraining layer (26) is laminated on at least one surface of said resin foam sheet (S), the resin foam sheet (S) heated and softened at a high temperature is placed into the forming die assembly (41, 42) with a substantially uniform thickness of the resin foam sheet (S) being maintained by the drawdown restraining layer (26), and the forming dies (41, 42) are clamped to mold the resin foam substrate (21) into a desired curved shape.

7. A manufacturing method of an automotive interior component (10) that entirely or partly includes a laminated assembly comprising: a resin foam substrate (21) that is formed into a desired shape, light in weight, and has a shape-holding property; a resin rib (22) in a predetermined pattern shape integrally laminated on a rear surface of the resin foam substrate (21); and a decorative member (23) attached to a front surface of said resin foam substrate (21),
wherein said method comprises the steps of:
heating and softening the resin form sheet (S);
placing the resin foam sheet (S) heated and softened into forming die assembly (41, 42) and then placing the decorative member that is not heated or is heated at a low temperature on an upper surface of said resin foam sheet (S);
clamping the forming dies (41, 42);
molding the resin foam substrate (21) into a desired shape at a low pressing pressure; and
integrally attaching the decorative member to the front surface of the resin foam substrate (21) by remaining heat from the resin foam sheet (S); and then
injecting and filling a molten resin (M1) into a groove (424) in a lower die (42) immediately before or after clamping of the forming dies (41, 42) to integrally laminate the resin rib (22) on the rear surface of the resin foam substrate (21) and form the laminated assembly (20).

8. The manufacturing method of an automotive interior component according to claim 7, further comprising the steps of:
compression bonding a hot melt film (24) on the rear surface of said decorative member (23) by flame laminating;
placing the decorative member (23) on the upper surface of the resin foam sheet (S) set in the forming dies (41, 42); and
melting the hot melt film (24) by the remaining heat from the resin foam sheet (S) to integrate the resin foam substrate (21) with the decorative member (23) using the hot melt film (24) as a bonding medium.

9. The manufacturing method of an automotive interior component according to claim 7, further comprising the steps of:
forcedly blowing warm or hot air by a blowing mechanism (70) from a recessed surface (427) of the lower die (42) toward the rear surface of the resin foam sheet (S) to restrain a drawdown of the resin foam sheet (S) when setting the resin foam sheet (S) into the forming dies (41, 42); and
molding the resin foam sheet (S) while maintaining a substantially uniform thickness thereof.

10. The manufacturing method of an automotive interior component according to claim 9, wherein a drawdown restraining layer (26) is laminated on at least one surface of said resin foam sheet (S) in extrusion of said resin foam sheet (S) by remaining heat thereof.
